# EUROPEAN PATENT APPLICATION

(11) **EP 3 637 352 A1**
(43) Date of publication of application: **15.04.2020**
(21) Application number: 19202551.8
(22) Date of filing: 10.10.2019
(51) Int. Cl.: G06Q 30/02, G06Q 50/16

(54) **CREX AGENT, A PATTERN MATCHING REAL ESTATE VALUATION PLATFORM**

(30) Priority: 11.10.2018 US 201862744354 P
(71) Applicant: Harrington, Andrew John, North Branch, Minnesota 55056 (US)
(72) Inventor: Harrington, Andrew John, North Branch, Minnesota 55056 (US)
(74) Representative: Sandersons

(57) **Abstract**

The present invention is web-based platform for quick evaluation of real estate value. Markets are separated into well-defined boundaries. Local real estate professional's inputs are considered while defining these defined individual market locations. A basis property is selected in each of the defined market. Measurable and non-measurable factors are quantified for the basis property. Site value is calculated for the basis property. The site value and measurable factor value is subtracted from the sale price of basis property and the non-measurable factor is proportionately adjusted, so that the total aggregates to sale price of basis property. A visual pattern is created and a database is created having visual pattern of all properties. Subject property input is received, visual pattern generated and comparable visual patterns are extracted from the database. Visual patterns are displayed to the user who can quickly select most appropriate pattern to estimate the value of the subject property.

## Description

### FIELD OF THE INVENTION

The present invention generally relates to an automatic valuation of real estate property, and more specifically, a web-based platform for valuation of real estate property by visually matching comparable patterns of real estate property listings.

### BACKGROUND OF THE INVENTION

The background of the invention includes information that may be useful in understanding the present invention. It is not an admission that any of the information provided herein is prior art, relevant to the presently claimed invention, or that any publication specifically or implicitly referenced is prior art.

When looking to purchase real estate property, the intended buyer typically consults a real estate broker/agent related to a particular geographic area. The broker/agent helps to determine the appropriate property for the buyer considering the buyer's interest. Further, the real estate agent/broker who through training and experience have learned to value real estate within particular geographic area by using a checklist, helps in calculating an appropriate value for the particular property. Another method for estimating the value of a real estate property is by using a fully automated system that derive a real estate value through mathematical formulae. Number of factors are considered in deriving the value like, size of the property, number of bedrooms, zip code, schools etc.

To be effective, valuation must have a reliable basis in both calculation, and opinion. Opinion has not been easy to measure. It varies from professional to professional and that too without a re-constructible validation of the opinion of the agent/broker. Algorithmic valuations alone are calculations that do not separate out opinion factors. These calculated results can be skewed by inclusion of dissimilar properties.
Valuation models that are promulgated by algorithm only search values have a difficulty in aggregating multiple professional opinions in a process that allows for other professionals and non-professionals to determine how the opinions relate to the value of an item, or real estate. These computers assisted valuation models are unable to differentiate opinion factors from quantifiable factors within a defined market for a specific item or real property. Current computer assisted valuation models are unable to differentiate marketable differences between items or real property with similarities in type or in location due to the effect of opinions on demand. In current computer assisted valuation models, search and sort capabilities are diminished due to the presence of factors in the item or real estate, that require an understanding of the marketable differences in the opinion factors. Current computer assisted valuation models are unable to construct a value of an item or real estate by aggregating professionally determined market-based opinion factors alone or in conjunction with quantifiable factors. Current computer assisted valuation models are unable to reconstruct a value to include the process of identifying how the professionally derived marketable opinion factors affected or became part of the valuation of the item or real estate. Thus, there is a need for more accurate calculation with separation of opinion related factors.
Further, valuation speed for professionals is limited by the necessary analysis to sort through available data sources to locate individually, the most similar sales within a market set. This along with the necessity to calculate and prove adjustments and sources becomes a lengthy report development process. Thus, there is a demand for rapid and re-constructible valuation reporting tool/platform. Further, explanation of a value is burdened the requirement of high technical understanding of the calculations, and the lack of proof that the most similar sales were included in the valuation. AVM's and individual appraisals do not alleviate the consumers need to understand and separately validate the results. Thus, there is a need for a mechanism for simple validation of similarity of comparable real estate property and simple tool/platform for testing/validation of calculations is highly demanded by consumers.
Further, AVMs lack individual professional results. They lack local professional input in valuation. They generally gather data and generate calculations from dissimilar properties. They lack validation or re-construction that can be completed by the consumer. Appraisal/CMA require long analysis and report generation, typically increasing cost of valuation. The reports are difficult for an inexperienced consumer to understand. Validation often requires another valuation analysis by a separate professional. Re-construction requires a high degree of valuation competence and lacks any simple or fast procedures.

### OBJECTS OF THE INVENTION

An object of the present invention is to enable user to determine value of the subject property. An object of the present invention is to expand reach of properties to users who are present at remote locations.

An object of the present invention is to provide views of property from different angles so that user can perceive the best.

An object of the present invention is to provide an easy way to sell/rent of property.

### SUMMARY OF THE INVENTION

The present invention generally relates to an automatic valuation of real estate property, and more specifically, a web-based platform for valuation of real estate property by visually matching comparable patterns of real estate property listings.

Broadly, the present invention is a method for aggregating professional opinion about real estate properties and providing a user-friendly interface to estimate value of a subject real estate property. The method develops a plurality of standard defined markets for the real estate properties. The method develops a standard or basis of professional opinion for an item or real estate property within each of the defined market. The professional opinion about marketable opinion-based factors for all or multiple items or real estate property within each defined market based on pricing or sales price are aggregated in a database. The method then divide quantifiable factors, calculated from a process of regression, to separate quantifiable factors from opinion factors. Corrections if any are applied to the data. The method generates a computer assisted search based on defined markets, similarity of opinion and quantifiable factors to locate the most similar items or real estate property within the defined market. The method uses computer assisted calculations to determine a subject item or real estate property value based on similarity to items or real estate property in the database. The method enables displaying the defined market, search pattern, all calculations, and items or real estate property that were identified as sets within the search process and the final calculation. Further, the method generates adjustments for time and for location of the market.

In an aspect of the invention, a platform for creating a database for professionally aggregated real estate sales and listings that have been patterned for rapid analysis, comparison, calculation, reporting and validation is provided. A visual pattern is created for each of the real estate property by having local professionals to utilize the same process in their analysis of sales, without inhibiting the quality of their analysis. This visual pattern, which can be constructed as a 2D or 3D ball diagram (for example, however any shape or size can be used in constructing the visual pattern), has proportionally allocated partitions in the diagram, with each proportion representing a factor that contributes to the overall price/value of the real estate property. The diagram partitions represent a calculated amount for each proportioned factor which combined equals the sales price of the property being analyzed. These visual patterns can be compared in a very short time, say seconds, to other visual patterns created for real estate properties within the same market set of potential comparable to estimate the value of a subject property. An advantage of this invention is that, it allows a non-professional user to easily pair the visual pattern created by inputting their requirements with that visual pattern created by inputs from a local professional. In this fashion all results generated are based on a professional input. Factors represented are of two distinct categories. The first category is primary opinion-based factors, those which rely solely on human interpretation. The second category is all market pertinent and salient factors that are items of a property that are typically counted, measured or identified in the same way for all properties within a defined market. The pattern process allows the professional completing a valuation to focus on opinion factors. This type of valuation process does not require them to generate any calculations for non-opinion factors. By comparing a subject property to potential comparables within the same market, utilizing patterns in this database, the set of comparables can be rapidly reduced to the most similar sales or listings.

In an aspect of the invention, emotional effect is reduced in order to generate a re-constructible calculation and this requires limiting the input range to a small set of variables and forcing the user to consider how other people would view each of the same variables in a side by side comparison. Professionals currently consider their determination about how it is or will be perceived from reviewers, underwriters and what can be defended in court. Our system is designed to eliminate emotional influence and create supported results.

In an aspect of the invention, a method for automatic valuation of real estate properties is provided, wherein the method enables: defining a plurality of geographical markets for the real estate properties, wherein each of the plurality of geographical market is defined by a boundary, defining individual market separation within the plurality of geographical markets, by selecting primary marketable features for a given set of properties that is not found in other property within the same identified geographical market, determining a basis property for each of the plurality of individual markets, wherein the basis property has an associated sale price, calculating a site value for each of the determined basis property, quantifying measurable factors of the determined basis property, quantifying non measurable factors of the determined basis, adjusting the total of the non-measurable factors proportionately so when added to the determined site value and quantified measurable factors they aggregately equal the sales price for each basis property, creating a database comprising visual patterns representing the proportionately adjusted factors for each property in each of the plurality of defined markets, constructing a visual pattern for a subject property in one of the plurality of defined markets, extracting a set of comparable visual patterns from the database, wherein the database pertains to the subject property's defined individual market, displaying the visual pattern of the subject property and the set of comparable visual patterns on a computing device display screen; and enabling a user to compare the visual patterns and determine a value for the subject property.

The method further enables defining areas such as, but not limiting to, state, counties, districts, municipalities, blocks, schools, location co-ordinates, latitude and longitude values, GPS co-ordinates.

The method further enables determining for each of the defined markets, by selecting a property having both the most minimal and most maximal market expected factors and features near a median sale price of the defined market.

The method further enables calculating using at least one of, a direct professional determination, an Artificial Intelligence based determination, or a machine learned result based on aggregated professional input, or direct aggregated professional input.

The method further enables defining non-measurable factors comprises opinion factors like, view, quality, condition, amenities.

The method further enables adjusting the sale price first by subtracting the calculated site value from sale price and further adjusting the sale price by subtracting the quantified measurable factors and proportionately dividing the remainder into the remaining non opinion factors.

The method further enables the visual pattern to represent, the non-measurable, measurable and other factors proportionately.

The method further enables the visual pattern to be a 2D or 3D object of varying shape, size or color.

The method further enables adjusting the value of the subject property for time and/or location value to determine an overall value for the subject property.

In an aspect of the invention, a system for automatic valuation of real estate properties is described, the system comprising,
a central facility comprising a processor, a memory, wherein the memory comprises instructions which when executed by the processor causes the central facility to;
define a plurality of geographical markets for the real estate properties, wherein each of the plurality of geographical market is defined by a boundary, define individual separation within the plurality defined market by the boundary, by selecting a primary marketable features for a given set of properties that is not found in other property within the same identified geographical boundary, determine a basis property for each of the plurality of defined markets, wherein the basis property has an associated sale price, calculate a site value for each of the determined basis property, quantifying measurable factors of the determined basis property, quantifying non measurable factors of the determined basis property, adjustment to the total of the non-measurable factors proportionately so when added to the determined site value and quantified measurable factors they aggregately equal the sales price for each basis property, create a database comprising visual patterns representing the proportionately adjusted sale price for each property in each of the plurality of defined markets, receive input information regarding a subject property from client computer, construct a visual pattern for a subject property in one of the plurality of defined markets, extract a set of comparable visual patterns from the database, wherein the database pertains to the subject property defined market, transmit the extracted set of comparable visual patterns and visual pattern of the subject property to a client computer,
a database having stored therein, visual patterns representing a proportionately adjusted sale price for each property defined in plurality of defined markets;
one or more client computers comprising a processor, a memory, wherein the memory comprises instructions which when executed by the processor causes the client computer to;
display a user interface screen, wherein the user interface screen enables a user to provide input information associated with a subject property, transmit the input information to a central facility, receive and display the visual pattern of the subject property and the set of comparable visual patterns on the display screen; and enable a user to compare the visual patterns and determine a value for the subject property.

The central facility, the database and the one or more client computers are connected through a computer network.

Various objects, features, aspects and advantages of the inventive subject matter will become more apparent from the following detailed description of preferred embodiments, along with the accompanying drawing figures in which like numerals represent like components

### BRIEF DESCRIPTION OF THE DRAWINGS

Other features and advantages of the present invention will become apparent from the following more detailed description, taken in conjunction with the accompanying drawings, which illustrate, by way of example, the principles of the invention.
**Fig. 1****.** illustrates an exemplary flow diagram depicting the overall steps involved in the real estate property valuation method of the present disclosure
**Fig. 2****.** illustrates an exemplary flow diagram depicting the different phases involved in the real estate property valuation method of the present disclosure.
**Fig. 3****.** illustrates an exemplary visual pattern with proportionately adjusted measurable and non-measurable factors in the valuation of a real estate property
**Fig. 4****.** illustrates an exemplary visual pattern of subject property and the visual property of the set of comparables after search in the valuation of real estate property
**Fig. 5****.** illustrates a block diagram of an exemplary system used in valuation of a real estate property

The drawings are not presented to scale but are only used to illustrate the principles of the invention. In the drawings, like reference numbers indicate like elements.

### DETAILED DESCRIPTION OF THE INVENTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the spirit and scope of the present invention as defined by the appended claims.

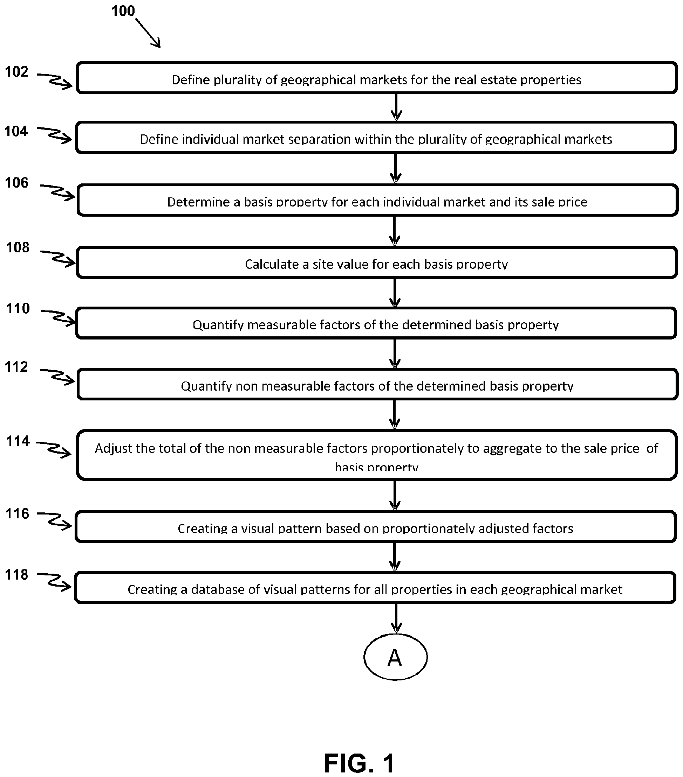

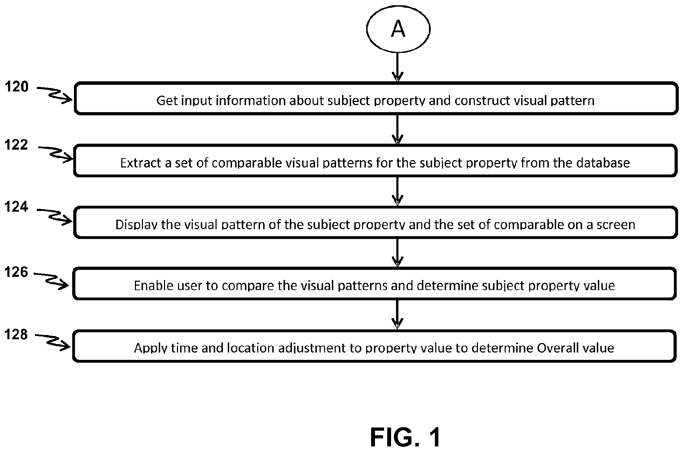

**Fig. 1****.** illustrates an exemplary flow diagram depicting the overall steps **100** involved in the real estate property valuation method of the present disclosure.

The process starts in step **102**, where plurality of geographical markets is defined for the real estate properties. In this process, real estate data from various sources, including and not limited to, the local Multiple Listing System (MLS) from the local association of realtors, online data aggregators, local government records and directly obtained data is aggregated. Subsequently, the properties are separated by regions starting with separately governed areas such as state, counties, school districts and municipalities etc. In step **104**, individual markets are separated within the plurality of geographical markets. This process is performed by obtaining from local professionals the salient features/characteristics that separate markets within each plurality of geographical markets. The trained and experienced professionals will be able to determine the level of location selection (or exclusion) that is necessary to include in a full market selection, for example, lakefront vs non lakefront, public utilities vs private, etc. In step **106**, a basis property is determined for each of the individual markets. This basis property is the property which is considered to have the most typical factors and features for that individual market that is near the median price of that individual market. Each of the basis property has an associated sale price. In step **108**, site value for the basis property is determined for each individual market. This is determined by using direct professional determination, Artificial Intelligent based determination, or machine learning inputs aggregated from various professionals. In step **110**, measurable factors for the determined basis property is quantified. This is performed by using regression analysis on the data, that is obtained from various real estate data sources, including and not limited to, the local Multiple Listing System (MLS) from the local association of realtors, online data aggregators, local government records and directly obtained data. Salient factors that are items of a property that are typically counted, measured or identified in the same way for all properties within a defined individual market forms the basis of such regression analysis. In step **112**, non-measurable opinion factors are quantified for the basis property. Opinion factors are factors which rely solely on human interpretation like view, condition, quality and amenities and the local professional's opinion about these factors for a particular property. The non-measurable factor value is adjusted proportionately for the basis property in step **114**, such that the aggregate sale price value of the basis property equals to the total of site value, the measurable factor value and the non-measurable factor value. Put another way, the total non-measurable factor value is adjusted proportionately so that when added to the determined site value and quantified measurable factors their aggregate equal the sales price for each basis property. In step **116**, a visual pattern is created based on the proportionately adjusted factors for each basis property. The visual pattern of a property represents the overall sale price of the property with, each proportional segment representing the calculated amount/value for each factor. In step **118**, a database of visual pattern is created comprising visual patterns of all the properties in each of the geographical market. Next in step **120**, information is obtained from a user about a subject property for which a value is to be determined. Based on the received input and the data available from the MLS, a proportionality of the factors related to the subject property is determined as per steps **108 to 114**, and a visual pattern of the subject property created. Next, the database is searched and a set of comparable visual pattern is extracted, that closely matches the visual pattern of the subject property in step **122.** In step **124**, the visual pattern of the subject property and the set if comparable visual patterns are displayed on a screen. In step **126**, the user is able to view the visual pattern and determine within seconds the most appropriate comparable pattern from the displayed set of comparable visual pattern. In step **128**, time adjustment and location adjustment, if any, are applied to the amount/value of the user selected comparable visual pattern property and an overall value/amount of the subject property is displayed to the user. Thus, a non-professional customer is able to quickly determine the value of his/her property, be it residential or commercial, based on professional inputs.

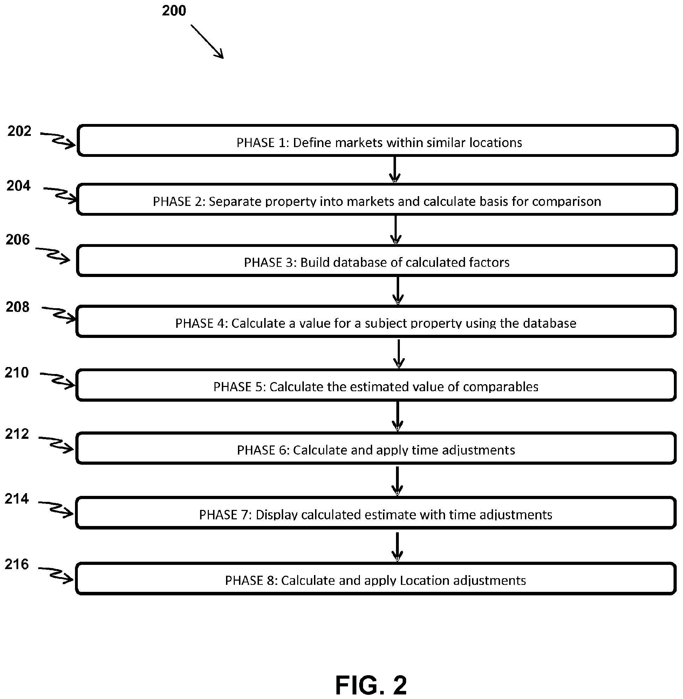

**Fig. 2****.** illustrates an exemplary flow diagram depicting the different phases involved in the real estate property valuation method of the present disclosure. More specifically, the overall method is segregated into different phase and each phase is being described in conjunction to Fig. 2.

**Phase 1 202**, comprises multiple steps involved in defining markets within similar locations. In this phase, properties are initially separated region by region. Each region is defined by a separately governed area/boundary such as state, counties, school districts and municipalities etc. Any other separation, such as to clearly and distinctly separate a market with unique and distinguishable features is also envisaged without departing from the spirit and scope of the invention. Next, specific marketable factors for real estate, that differentiates buyer demand in each of those locations as separated above, are obtained from local professionals, so that without such factor, feature or utility, a typical buyer would not consider the property as a viable, or equal alternative to his expectations. Next, a question or search parameter is generated and applied to each property to separate them into their designated markets.

**Phase 2 204,** comprises multiple steps involved in separating property into defined markets and calculating the basis for comparison. Initially, sales/listing data from available sources, MLS from the local association of realtors, online data aggregators, local government records and directly obtained data from qualified appraiser/professional verified are gathered. Next this data is sorted based on the features/characteristics as defined by the professionals. Also sorting based on location parameters within markets can be performed. Any correction or changes to data is then done and displayed. A plot chart indicating all sales/listings is then displayed and a median price calculated based on the displayed sales/listing price. The median or basis property, is generally selected based on professional consensus, who identify the most commonly accepted features/characteristics considered to be typical, without excess or shortage, expected within that defined and selected market and does not vary from customary features/characteristics. If any deviation is found in the selected median or basis, for example if the median or basis property has a feature that is not common or is extreme in quantity/quality, a sale/listing price most near that median price without those extremes is chosen instead. Next the site value for the median or basis property is estimated. This is then subtracted from the sales price of the selected property to determine the improvement price of the selected property. The sale price of the median or basis property is an aggregate of two different types of factors (a) Opinion factors, like quality, condition, view and amenities and (b) Quantifiable factors, like site area, size/GLA, design, room count, age etc. Next, linear regression is run based on available market set data. Calculate quantifiable factors from available regression. Over time the site value and quantifiable factors calculations may become more reliable and re-entered to correct the rest of the database for the market. Regression sets progress as searches are completed. Subtract from the median property both site value and calculated quantifiable value and convert to an absolute value. Divide the result by 3 (no of opinion factors) and allocate the result equally to each of the non-site factors i.e. quality, condition and amenities.

**Phase 3 206,** comprises multiple steps involved in building a database of calculated factors. First, calculate the difference of sales price or listing price of the subject property after subtracting a list to sale price ratio for that market, from the basis property sales price. Analyze, using a professional determination or Artificial Intelligent determination, or machine learned result based on aggregated professional input, the opinion factors using primarily photos to estimate the difference, as a percentage or amount for each, so that the total of those four is closely equal to 100% of the amount calculated in the above step. Next calculate the non-opinion factors for the subject property based on the value of identified salient non-opinion factors, after subtracting median site value. Determine a ratio or percentage of opinion factors calculated in phase 3 to opinion factors calculated in Phase 2 (last step). Next calculate the site factor. There are two ways of calculating this. (a) If comparing to the median price: add percentage of opinion factor calculate in Phase 3 to the median site value (V). (b) If comparing to a median's replacement property, which has been calculated in phase 3 and has been incorporated in the database, multiply the percentage of opinion factor calculate in Phase 3 result to the replacements calculated site value. Add the calculated non-opinion factors, the ratio or percentage of opinion factors value calculated in phase 3 to opinion factors value calculated in Phase 2 and the site value calculated in the previous step and subtract from subject property price to determine error amount and display the same. At this point correction can be done to the calculated opinion factor values either automatically or manually. In auto correct mode, the opinion factor values calculated in phase 3 are compared with other professional's opinion factor values. An average of all such opinion factor values is calculated and automatically re-apportion this value to (a) the ratio or percentage of opinion factors value calculated in phase 3 to opinion factors value calculated in Phase 2 and (b) the site value calculated in phase 3, such that when they are added to the non-opinion factor values calculated in phase 3, they will equal the subject property's sales price. Next, apply an average or weighted average of the professional's results, for ratio or percentage of opinion factors value calculated in phase 3 to opinion factors value calculated in Phase 2 and apply an automatic correction to re-apportion the opinion factor results to equal subject property sales price. This result is comparables being generated for subject property. Identify sales/listings that have been calculated in phase 3 steps that are nearer in sales/listing price to the next subject property to be analyzed, as a replacement for comparison to the median. Iterate the process for all subject property in the defined individual market to find the value. Repeat the process for all geographical markets and create a database of all properties.

**Phase 4 208,** comprises steps involved in calculating a value for a subject property using the database created in Phase 3. Using the market identification criteria as defined in phase 1, identify a subject property's correct market. Subsequently, input salient non-opinion factors for the subject property. Input default ranges to be applied to the price, opinion factors and salient non opinion factors to automatically narrow results to complete a database search. Determine a nearest sale/listing from the set identified from the database search having sale/listing price nearest to the median price of that market. Compare the subject property to the nearest sale/listing to analyze, by user action or by Artificial Intelligent determination, or machine learned result based on aggregated professional input, and estimate by available photos and data, the difference in each opinion factor by inputting a percentage or range as the indicator. Calculate each opinion factor result in above step by multiplying the result to the comparables calculated result in phase 3, thereby creating a new search input range for the database as describe above in Phase 4.
Repeat the process until a desired number of nearest sale/listing set is reached.

**Phase 5 210,** comprises steps involved in calculating the estimated value of comparables calculated in phase 4. First, estimate the subject property's opinion factors by comparing to one or all resulting comparables identified in Phase 4, by user action or by Artificial Intelligent determination, or machine learned result based on aggregated professional input, to generate a final estimated percentage of the subject's opinion factors. Next, calculate the non-opinion factors values for the subject property utilizing all sets of sales/listings from the larger quantity to the smallest quantity to reduce the mathematic error or range for each factor. Calculate the subject's opinion factor percentages to each opinion factor result of comparable property identified in Phase 3. Add the calculated amounts of opinion factors and non-opinion factor and display the calculated amount.

**Phase 6 212,** comprises steps involved in calculate and apply time adjustments. First, calculate the median sales prices over a period of time equal to or greater than the period from the earliest dated sale to the most recent sale from the final nearest sale/listing set calculated in phase 4. Divide the time adjustment calculation equally by date, as a daily amount. Apply the calculated time adjustment amount calculated above to the sales/listing price for each sale/listing in phase 5, equally distributed to all opinion and non-opinion calculations.

**Phase 7 214,** comprises steps involved in displaying calculated estimate with time adjustments. Firstly, using the median, high and low sale/listing in the final nearest sale/listing set, after applying time adjustments in phase 6, calculate the subject's non-opinion factors based on utilizing all sets of sales/listings from the larger quantity to the smallest quantity to reduce the mathematic error or range for each factor. Next, calculate the opinion factors for the high sale/listing in phase 5 above and add this calculation to the non-opinion factors calculation above. Display these as the high estimated value results. Repeat the above calculation for medium and low sale/listing and display the result as medium and low range values respectively.

**Phase 8 216,** comprises steps involved in calculating and applying location adjustments. Comparing the calculated factors for each market's median to their price, the differences of the resulting respective percentages are used to re-calculate the non-subjects market database, and the same search process in Phase 4-6 are used. Firstly, choose similar markets based on proximity with similarity of factor calculations as a percentage of sales price, or by professional determination, or Artificial Intelligent determination, or machine learned result based on aggregated professional input. Next, select the same time period for both markets. Determine the median from for both markets. Apply time adjustments calculated to both properties. Calculate the factor contribution to the sales price for each property. Determine the location adjustment to be applied to the non-subject market set by, increasing or decrease non-subject market factor percentage to match the subjects factor percentage. The is done by, (a) if the subject median factor percentage is higher than the corresponding non-subject median factor, the location adjustment is to increase the non-subject factor by the absolute value of the difference or (b) if the subject median factor is lower than the corresponding non-subject factor then the location adjustment is to decrease the non-subject factor by the absolute value of the difference. Next apply the search process as in Phase 4. Apply the location adjustments determined to the resulting search result listing. Apply time adjustments and display the estimated value.

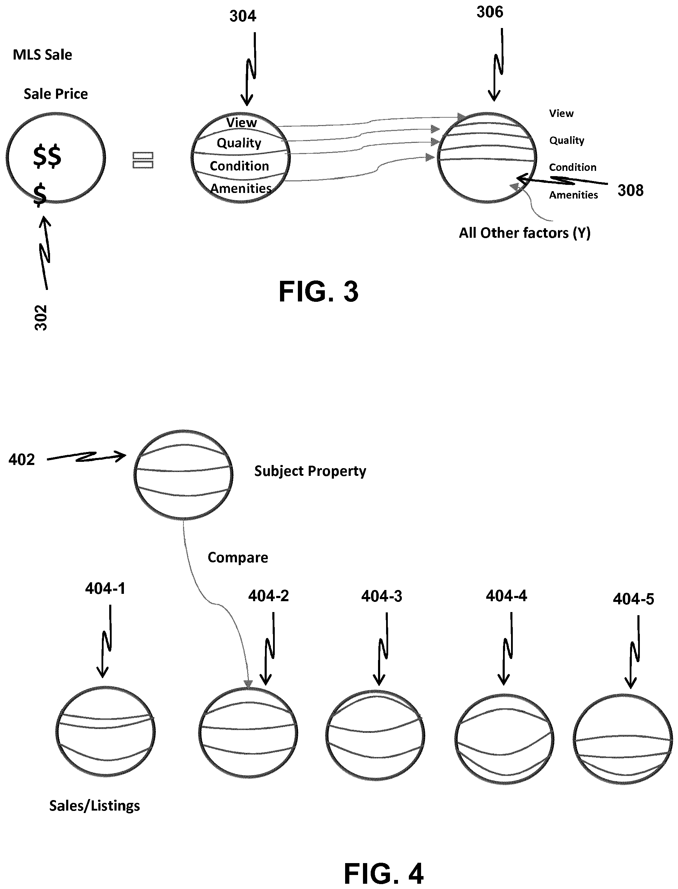

**Fig. 3****.** illustrates an exemplary visual pattern with proportionately adjusted measurable and non-measurable factors in the valuation of a real estate property. A ball diagram 302 is depicted in Figure 3, that represents the sale price of a property as a visual pattern. Though the sale price is represented as a ball diagram, it can be represented in any shape like square, triangle, rectangle, rhombus, parallelogram without departing from the spirit and scope of the invention. This sale price consists of two distinct categories of factors. The first category is primary opinion-based factors. Those which rely solely on human interpretation. The second category is all market pertinent and salient factors that are items of a property that are typically counted, measured or identified in the same way for all properties within a defined market. The size of the ball, further may be representative of the overall value of the property. So larger the size, higher the price and vice versa. In an alternative embodiment, the balls can be colored, with distinct colors for each defined individual market.

The ball **304**, illustrates a proportionally adjusted value of a real estate property, with only the non-measurable opinion factors. It can be seen that; the four opinion factors have been represented as forming a portion of the circle based on the percentage contribution of each factor in the sale price or amount of the property. The proportion can be equally distributed in an embodiment of the invention. In another embodiment, the percentage contribution of each factor can be unequal. The ball **306**, illustrates a proportionally adjusted value of a real estate property, with the non-measurable opinion factors, measurable factors and other factors **308** proportionately contributing to the overall sale price of a real estate property. It should be noted how the non-measurable opinion factors represented as larger chunks in **304,** go on to occupy smaller chunks in **306,** due to the inclusion of measurable and other factors in the overall sale price. Thus, a visual pattern is constructed for each property in various defined geographical market.

**Fig. 4****.** illustrates an exemplary visual pattern of subject property and the visual property of the set of comparables after search, in the valuation of real estate property. The ball **402**, illustrates the visual pattern for a subject property with proportionately adjusted factors. This is constructed based on inputs provided by the user and median sale price in the defined market of the subject property. The balls **404-1 to 404-5,** represent comparables or nearest sale/listing set on the search result performed in the defined market database "for the subject property. It should be noted that each of comparables is represented to have different proportions of factors. This is for illustrative purposes only. Visual pattern **404-2** most closely resembles the subject property's proportion of factors. A non-professional user viewing the above display, can easily compare and choose the visual pattern **404-2,** as the one closest to the subject property and quickly get a valuation estimate of the subject property based on professional inputs.

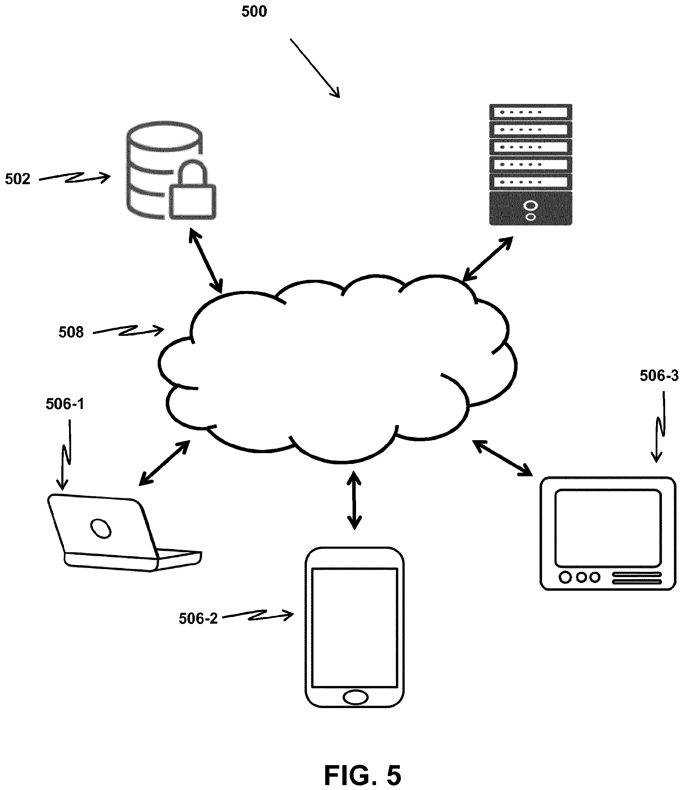

**Fig. 5****.** illustrates a block diagram of an exemplary system **500** used in automatic valuation of a real estate property. As illustrated, the system comprises, a central facility **502,** comprising a processor and a memory (not shown). In an embodiment, the central facility can be a server or a cloud-based computing environment. The central facility has stored in its memory instructions, which when executed by the processor causes the central facility to provide a web-based online platform for automatic valuation of real estate property. The central facility is connected to a database **504** and one or more client devices **506-1 to 506-3** over a computer network **508.** The computer network can be a wired network and/or a wireless network. The one or more client devices can be selected from a group of a smartphone, a server, a laptop, a computer, a PDA and the like.

Operational steps of the system will now be described. The web based online platform enables the central computer to define a plurality of geographical markets for the real estate properties. The plurality of geographical market is defined by a boundary region starting with separately governed areas such as state, counties, school districts and municipalities etc. Further, individual separation within the plurality defined geographical boundary is defined by selecting primary marketable features for a given set of properties that is not found in other property within the same identified geographical boundary. Subsequently, a basis property is determined for each of the plurality of defined markets, wherein the basis property has an associated sale price. Next the central facility, enables calculation of a site value for each of the basis property and further enables quantifying measurable and non-measurable factors for the determined basis property. Subsequently, the total non-measurable factor total is adjusted proportionately, such that when added to the determined site value and quantified measurable factors, the total aggregately equals the sales price for each basis property. A visual pattern is created representing the proportionately adjusted factors for the basis property. Next a repository is created comprising visual patterns representing the proportionately adjusted sale price for each property in each of the plurality of defined geographical markets. This repository is transmitted and stored in a database that is connected to the central facility by a computer network. This is called the preparation phase.

One or more client devices are also connected to the central facility by the computer network. The client device comprises a processor and memory for storing information and instruction. The instructions when executed by the processor of the client device displays a user interface of a client application of the web-based platform. The user interface enables a user, to input information regarding a subject property for which he/she desires to estimate a value. Once the user enters the required information, this information is sent via the computer network to the central facility for processing. The central facility receives the information regarding a subject property from client computer and constructs a visual pattern for a subject property in one of the plurality of defined markets. It then extracts a set of comparable visual patterns from the database, and transmits the extracted set of comparable visual patterns and visual pattern of the subject property to the client computer.

The one or more client computers receives and displays the visual pattern of the subject property and the set of comparable visual patterns on the display screen and enables a user to compare the visual patterns and determine a value for the subject property. Further time and location adjustments are added to the value of the subject property to estimate the adjusted property value.

Thus, embodiments of the present invention provide features for automatic valuation of real estate property by comparison of visual patterns representing proportionately adjusted value of the real estate.

The invention is a process not currently used in real estate valuation and pricing. The invention creates a method of defining 'markets' in a way that can be standardized across all locations. The invention creates a specific measurable and calculable basis within each market. The process of generating this basis is also standardized across all locations and markets. The invention reconstructs the abstract concept of value opinions into a quantifiable and measurable amount. The invention places quantified opinion into a visually recognizable pattern. The invention structures all property pricing and value in a visual and searchable pattern that can be more easily measured against other property within the same or similar (other) markets. The invention places all gathered and all reconstructed data within a platform accessible online. The invention enables professionals to display and define their pricing/valuation reasoning and expertise with direct observation from their client as it is developed. The invention allows for pricing/value conclusions to be fully developed more rapidly than traditional appraisal methodology and still can be accepted as an appraisal report. The invention allows for pricing/value conclusions to be fully reproduced including all sets of data analyzed during the development. The invention allows for non-expert pricing/value development with the same relative speed and same reproducible results as a professional. The invention alleviates the current restraints on professionals and non-professionals in proving or supporting their pricing/valuation. The invention alleviates the time constraints on development of reproducible appraisal results. The invention alleviates the lending restrictions requiring credible methodology in alternative valuation or evaluation. The invention allows for a time adjustment calculation specific to markets and location with reproducible method and results which are not available in current systems. The invention allows for location adjustment calculations using paired markets with reproducible results and methods that are not available in current systems. The invention allows for identifying unique or specific property types/designs/utility across markets and locations in a method not available in current systems. The invention can be displayed creating shapes and colors to represent the established factors of value/price. The shapes/colors can be directly proportional to the effect of the established factor to allow for comparative search based on similarity of shape/color for individual factors or a combination of factors. Shape and color can represent either the market or the factor. Example the market is a color and the shape are a combination of factors. Median search can be direct comparison of the subject shape/color to locate the most similar shape/color in the data set. Median selection alternatives can include direct selection or input from available exterior sources including known previous valuation/pricing and assessment.

The invention has been described with reference to various specific and illustrative aspects of the present invention and techniques. However, it should be understood that many variations and modifications may be made while remaining within the spirit and scope of the invention. Many alternatives, modifications and variations will be apparent to those skilled in the art in light of the foregoing description. Accordingly, this invention is intended to embrace all such alternatives, modifications, and variations that fall within the spirit and scope of the description.

### ELEMENTS

| | |
|---|---|
| Visual Pattern | **302, 304, 306** |
| Visual Pattern | **402, 404-1 to 404-5** |
| Central facility | **502** |
| Database | **504** |
| Client devices | **506-1 to 506-3** |
| Computer network | **508** |

### ADVANTAGES OF THE INVENTION

An advantage of the present invention is to overcome drawbacks of prior existing solutions.

An advantage of the present invention is to enable user to determine value of the subject property.

An advantage of the present invention is to expand reach of properties to users who are present at remote locations.

An advantage of the present invention is to provide views of property from different angles so that user can perceive the best.

An advantage of the present invention is to provide an easy way to sell/rent of property.

## Claims

1. A method for automatic valuation of real estate properties, the method comprising:
defining a plurality of geographical markets for the real estate properties, wherein each of the plurality of geographical market is defined by a boundary;
defining individual market separation within the plurality of geographical markets, by selecting primary marketable features for a given set of properties that is not found in other property within the same identified geographical market;
determining a basis property for each of the plurality of individual markets, wherein the basis property has an associated sale price;
calculating a site value for each of the determined basis property;
quantifying measurable factors of the determined basis property;
quantifying non measurable factors of the determined basis property;
adjusting the total of the non-measurable factors proportionately so when added to the determined site value and quantified measurable factors they aggregately equal the sales price for each basis property;
creating a database comprising visual patterns representing the proportionately adjusted factors for each property in each of the plurality of defined markets;
constructing a visual pattern for a subject property in one of the plurality of defined markets;
extracting a set of comparable visual patterns from the database, wherein the database pertains to the subject property's defined individual market;
displaying the visual pattern of the subject property and the set of comparable visual patterns on a computing device display screen; and
enabling a user to compare the visual patterns and determine a value for the subject property.

2. The method of claim 1, wherein the boundary is defined by areas such as, but not limiting to, state, counties, districts, municipalities, blocks, schools, location co-ordinates, latitude and longitude values.

3. The method of claim 1, wherein the basis property is determined for each of the defined markets, by selecting a property having both the most minimal and most maximal market expected factors and features near a median sale price of the defined market.

4. The method of claim 1, wherein the site value is calculated using at least one of, a direct professional determination, an Artificial Intelligence based determination, or a machine learned result based on aggregated professional input, or direct aggregated professional input.

5. The method of claim 1, wherein the non-measurable factors comprises opinion factors like, view, quality, condition, amenities

6. The method of claim 1, wherein the sale price is first adjusted by subtracting the calculated site value from sale price and further adjusted by subtracting the quantified measurable factors and proportionately dividing the remainder into the remaining non opinion factors.

7. The method of claim 1, wherein the visual pattern represents, the non-measurable, measurable and other factors proportionately.

8. The method of claim 7, wherein the visual pattern is a 2D or a 3D object of varying shape, size or color.

9. The method of claim 1, wherein the value of the subject property is further adjusted for time and/or location to determine an overall value for the subject property.

10. A system for automatic valuation of real estate properties comprising:
a central facility comprising a processor, a memory, wherein the memory comprises instructions which when executed by the processor causes the central facility to;
define a plurality of geographical markets for the real estate properties, wherein each of the plurality of geographical market is defined by a boundary;
defining individual market separation within the plurality of geographical markets, by selecting primary marketable features for a given set of properties that is not found in other property within the same identified geographical market;
determine a basis property for each of the plurality of defined markets, wherein the basis property has an associated sale price;
calculate a site value for each of the determined basis property;
quantifying measurable factors of the determined basis property;
quantifying non measurable factors of the determined basis property;
adjustment to the total of the non-measurable factors proportionately so when added to the determined site value and quantified measurable factors they aggregately equal the sales price for each basis property;
create a database comprising visual patterns representing the proportionately adjusted sale price for each property in each of the plurality of defined markets;
receive input information regarding a subject property from client computer;
construct a visual pattern for a subject property in one of the plurality of defined markets;
extract a set of comparable visual patterns from the database, wherein the database pertains to the subject property defined market;
transmit the extracted set of comparable visual patterns and visual pattern of the subject property to a client computer;
a database having stored therein, visual patterns representing a proportionately adjusted sale price for each property defined in plurality of defined markets;
one or more client computers comprising a processor, a memory, wherein the memory comprises instructions which when executed by the processor causes the client computer to;
display a user interface screen, wherein the user interface screen enables a user to provide input information associated with a subject property;
transmit the input information to a central facility;
receive and display the visual pattern of the subject property and the set of comparable visual patterns on the display screen; and
enable a user to compare the visual patterns and determine a value for the subject property.

11. The system of claim 10, wherein the central facility, the database and the one or more client computers are connected through a computer network.
